# EUROPÄISCHE PATENTANMELDUNG

(11) **EP 2 159 757 A2**
(43) Veröffentlichungstag der Anmeldung: **03.03.2010**
(21) Anmeldenummer: 09075376.5
(22) Anmeldetag: 17.08.2009
(51) Int. Cl.: G07C 5/00

(54) **Verfahren zur Anwendung von unterschiedlichen Applikationen in einem Telematiksystem**

(30) Priorität: 27.08.2008 DE 102008045046
(71) Anmelder: Capcologne GmbH, 50670 Köln (DE)
(72) Erfinder:
(74) Vertreter: Meissner, Peter E.

(57) **Zusammenfassung**

1. Verfahren zur Anwendung von unterschiedlichen Applikationen in einem Telematiksystem
2.1. Die Erfindung betrifft ein Verfahren zur Anwendung von unterschiedlichen Applikationen in einem Telematiksystem von Fahrzeugen.
2.2. Hierzu wird vorgeschlagen, dass die in einem Fahrzeug integrierten Hardwarekomponenten des Telematiksystems an einer gemeinsamen Kommunikationsschnittstelle zusammengeführt werden und unterschiedliche, auf gesonderten Computersystemen angeordnete Applikationen/Business Logiken über die gemeinsame Kommunikationsschnittstelle auf die einzelnen Hardwarekomponenten des Telematiksystems übertragbar sind.

## Beschreibung

Die Erfindung betrifft ein Verfahren zur Anwendung von unterschiedlichen Applikationen in einem Telematiksystem.

Von einem Telematiksystem spricht man, wenn mit Hilfe von technischen Geräten mindestens zwei Datenverarbeitungssysteme über ein Telekommunikationssystem miteinander verknüpft werden.

Der Einsatz von Telematiksystemen erfolgt zunehmend in Fahrzeugen, und zwar in Flotten-Management-Systemen, Navigationssystemen, Autotelefonanlagen, Mautsystemen, etc.

Die Anforderungen an Erstellung, Betrieb und Wartung von Telematiksystemen in Fahrzeugen unterscheiden sich teilweise erheblich wegen der betrieblichen Stabilität, Fehlertoleranzen, Testanforderungen, Produktzyklen und der Sensorik bzw. Kommunikationsqualität.

Die Folge davon sind unterschiedliche technische Ausprägungen und damit unterschiedliche Produktzyklen der jeweiligen Systeme.

Bisher werden daher in Fahrzeugen häufig mehrere vollständige Telematiksysteme eingebaut und betrieben, wobei diese dann auch entsprechend gewartet werden müssen.

Jedes Telematiksystem beinhaltet sowohl die Applikation / Business-Logik, die erforderlichen Sensorik/Ortungssysteme, Kommunikationssysteme, Anzeigensysteme sowie Mensch-Maschine-Schnittstellen.

Die unterschiedlichen Anforderungen an die Systeme ermöglichen die Nutzung eines gemeinsamen Computersystems durch die Applikationen nicht, da innerhalb eines einzelnen Computersystems eine Rückwirkungsfreiheit nicht sichergestellt werden kann.

Synergiepotentiale durch mehrfache Nutzung von Komponenten (Antennen, Ortungssystemen, Anzeigesysteme, etc.) werden so nicht genutzt.

Aus dem DE 20 2007 013 423 U1 ist ein Chipkarten-Terminal bekannt, mit einem Chipkarten-Schnittstellenmittel, die zum Zugriff auf eine erste Chipkarte eines ersten Chipkartentyps und eine zweite Chipkarte eines zweiten Chipkartentyps ausgebildet ist. Hierbei werden die von der zweiten Chipkarte auf einen Zugriff hin gelieferten Daten der zweiten Chipkarte durch Transformationsmittel in die erste Datenstruktur transformiert, bevor die Daten an den gemeinsamen Host geliefert werden.

Aus der DE 10 2006 008 248 A1 ist es darüberhinaus bekannt, dass auf einer Chipkarte eine oder mehrere Applikationen laufen können.

Der Erfindung liegt die Aufgabe zugrunde mögliche Synergiepotentiale durch mehrfache Nutzung von Komponenten auszunutzen.

Diese Aufgabe wird erfindungsgemäß gelöst durch ein Verfahren zur Anwendung von unterschiedlichen Applikationen in einem Telematiksystem von Fahrzeugen, das dadurch gekennzeichnet ist,
dass die in ein Fahrzeug integrierten Hardwarekomponenten des Telematiksystems an einer gemeinsamen Kommunikationsschnittstelle zusammengeführt werden und unterschiedliche, auf gesonderten Computersystemen angeordnete Applikationen/Business Logiken über die gemeinsame Kommunikationsschnittstelle auf die einzelnen Hardwarekomponenten des Telematiksystems übertragbar sind.

### Ausgestaltungen ergeben sich aus den Unteransprüchen

Durch das hier beschriebene System werden einerseits Sensorik, Steuerungs- bzw. Kommunikationssysteme (inkl. Hardware + Software/Firmware) von Applikationen (Business Logik) im Fahrzeug bzw. bei einem Telematiksystem sowohl logisch als auch physikalisch weitgehend von einander getrennt:
Andererseits nutzen unterschiedliche Applikationen getrennt voneinander eine gemeinsame technische Infrastruktur von Sensorik, Kommunikation, Ortung, Steuerung, Mensch-Maschine-Schnittstelle.

Das erlaubt es, die Applikation entsprechend ihrer Anforderungen zu dimensionieren und zu entwickeln, die nur notwendigen Qualitätssicherungsmaßnahmen zu ergreifen und unabhängig voneinander im Fahrzeug zu nutzen.

Durch diese Entkopplung wird sichergestellt, dass den unterschiedlichen Anforderungen an die Applikationen optimal Rechnung getragen werden kann, und zwar können
- Applikationen unabhängig voneinander entwickelt und vertrieben werden.
- Applikationen unterschiedliche Produktzyklen besitzen.
- Applikationen verschiedene Wartungszyklen haben.

Dabei soll die Applikation / Business Logik auf einem eigenen Computersystem implementiert werden und die Sensorik inkl. der informationstechnischen Schnittstellen sowie die dafür erforderliche Computertechnik (Hardware und Software) auf einem weiteren Computersystem.

Durch Nutzung einer standardisierten Schnittstelle werden beide Computersysteme verbunden.

Die Verbindung mehrerer Applikations-Computersysteme mit einem Sensorik-System ist möglich.

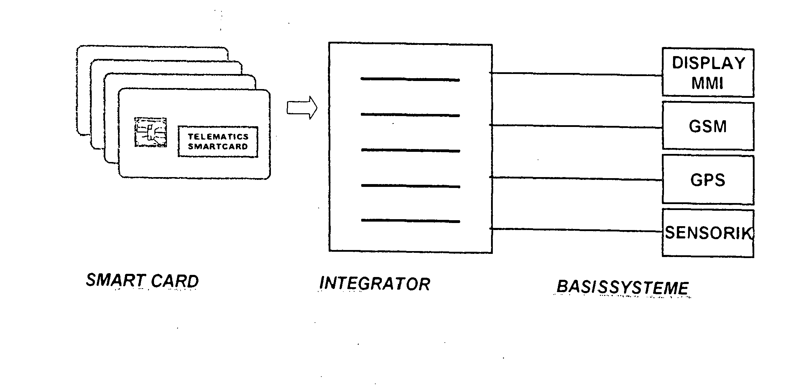

Ein Ausführungsbeispiel der Erfindung ist in der Zeichnung dargestellt und wird im Folgenden näher beschrieben:

Die einzelne Applikation / Business-Logik wird auf einer sogenannten SmartCard implementiert.
Eine SmartCard zeichnet sich durch die Integration eines kompletten Computersystems (CPU, flüchtigem und nicht flüchtigem Speicher, Kryptographiemodulen, Schnittstellen) auf in Form einer Scheckkarte aus.

Externe Schnittstellen mit und ohne galvanische Kopplung erlauben die Verbindung bzw. Kommunikation der Applikation mit der Außenwelt.

Die Ausprägung der SmartCard kann von den Anforderungen an die Applikation abhängig gemacht werden (Leistungsfähigkeit der CPU, Größe des Speichers, Kryptographie, etc.)

Die einzelne Applikation bildet in der auf ihr befindlichen Software die Logik ab. Zur Stromversorgung, zur Kommunikation mit Sensoren und/oder Nutzern nutzt die SmartCard die genormte Schnittstelle, und zwar eine Kommunikationsschnittstelle, die auch als Integrator bezeichnet werden kann, und greift auf Ortungs-, Kommunikations- und Meßsysteme sowie auf Mensch-Maschine-Schnittstellen (grafische Anzeige, Tastaturen, Mikrophone, Lautsprecher) zu.

Somit stellt sich das System wie Folgt dar:

Die SMARTCARD beinhaltet die
komplette Applikation inkl. der erforderlichen Computertechnologie und Speicher, Kryptochip, 1/0-Systeme Beinhaltet ggf. kleine Anzeigeelemente (LED, OLED-Displays) Serielle, verschlüsselte Kommuniktationsschnittstelle

Der INTEGRATOR beinhaltet die
Kartenaufnahme
Stromversorgung
Serielle, verschlüsselte Kommuniktationsschnittstelle
Computersystem zur Annahme und Beantwortung von Anfragen /
Kommandos der einzelnen SmartCards
Schnittstellen zu den Basissystemen

Die Basissysteme beinhalten
in das Fahrzeug integrierte, ggf. vorverbaute Systeme ggf. Nutzung von MMI-Systemen des Fahrzeugs Nutzung der vorhandenen Sensorik (V-Signal, etc.)

Dabei können mehrere SmartCards / Applikationen gleichzeitig und unabhängig voneinander genutzt werden.

## Patentansprüche

1. Verfahren zur Anwendung von unterschiedlichen Applikationen in einem Telematiksystem von Fahrzeugen,
**dadurch gekennzeichnet,**
**dass** die in ein Fahrzeug integrierten Hardwarekomponenten des Telematiksystems an einer gemeinsamen Kommunikationsschnittstelle zusammengeführt werden und unterschiedliche, auf gesonderten Computersystemen angeordnete Applikationen/Business Logiken über die gemeinsame Kommunikationsschnittstelle auf die einzelnen Hardwarekomponenten des Telematiksystems übertragbar sind.

2. Verfahren nach Anspruch 1,
**dadurch gekennzeichnet,**
**dass** die Applikation / Business Logik auf einem eigenen Computersystem implementiert werden und die Sensorik inkl. der informationstechnischen Schnittstellen sowie die dafür erforderliche Computertechnik (Hardware und Software) auf einem weiteren Computersystem.

3. Verfahren nach einem der vorstehenden Ansprüche,
**dadurch gekennzeichnet,**
**dass** die einzelne Applikation / Business-Logik auf einer SmartCard implementiert werden.

4. Verfahren nach Anspruch 3,
**dadurch gekennzeichnet,**
**dass** die SmartCard durch die Integration eines kompletten Computersystems mit CPU, flüchtigem und nicht flüchtigem Speicher, Kryptographiemodulen, Schnittstellen, in Form einer Scheckkarte ausgebildet ist.

5. Verfahren nach einem der vorstehenden Ansprüche,
**dadurch gekennzeichnet,**
**dass** die Kommunikation der Schnittstellen mit oder ohne galvanische Kopplung erfolgt.

6. Verfahren nach einem der vorstehenden Ansprüche,
**dadurch gekennzeichnet,**
**dass** zur Stromversorgung, zur Kommunikation mit Sensoren und/oder Nutzern die SmartCard die genormte Schnittstelle benutzt und auf Ortungs-, Kommunikations- und Meßsysteme sowie auf Mensch-Maschine-Schnittstellen wie grafische Anzeige, Tastaturen, Mikrophone, Lautsprecher, zugreift.

7. Verfahren nach einem der vorstehenden Ansprüche,
**dadurch gekennzeichnet,**
**dass** mehrere SmartCards / Applikationen gleichzeitig und unabhängig voneinander genutzt werden.
